# EUROPEAN PATENT APPLICATION

(11) **EP 4 285 750 A1**
(43) Date of publication of application: **06.12.2023**
(21) Application number: 21921887.2
(22) Date of filing: 29.01.2021
(51) Int. Cl.: A24F 40/40, A24F 40/46

(54) **ATOMIZER, BATTERY ROD AND ELECTRONIC ATOMIZATION APPARATUS**

(71) Applicant: Shenzhen Smoore Technology Limited, Shenzhen, Guangdong 518102 (CN)
(72) Inventor: DONG, Wenjie, Shenzhen, Guangdong 518102 (CN); ZHAO, Bosong, Shenzhen, Guangdong 518102 (CN); FANG, Weiming, Shenzhen, Guangdong 518102 (CN); ZHOU, Ruilong, Shenzhen, Guangdong 518102 (CN)
(74) Representative: De Arpe Tejero, Manuel
(86) International application number: PCT/CN2021/074489
(87) International publication number: WO 2022/160285

(57) **Abstract**

An atomizer (10), a battery rod (20) and an electronic atomization apparatus (100), the atomizer (10) comprising: a first connection end (m1) and a second connection end (m2), which are used for connecting to the battery rod (20) when the battery rod (20) is inserted; and an anti-counterfeiting circuit (11), which is connected to the first connection end (m1) and the second connection end (m2), wherein the anti-counterfeiting circuit (11) receives a first communication signal from the battery rod (20) by means of the first connection end (m1), and sends a second communication signal to the battery rod (20), thereby implementing the communication between the battery rod (20) and the atomizer (10); the first communication signal comprises a first level signal (V1) that acts as a logic high level and a second level signal (V2) that acts as a logic low level; the second communication signal comprises a third level signal (V3) that acts as a logic high level and a fourth level signal (V4) that acts as a logic low level; and the second level signal (V2) and the fourth level signal (V4) are greater than the power supply voltage of the anti-counterfeiting circuit (11).

## Description

### TECHNICAL FIELD

The present disclosure relates to the field of atomization technologies, and in particular, to an atomizer, a battery rod, and an electronic atomizing device.

### BACKGROUND

In an existing electronic atomizing device with an encryption function, a printed circuit board (PCB) is generally disposed in an atomizer, and a controller, a capacitor, and a metal oxide semiconductor (MOS) transistor are disposed on the PCB to implement the encryption function. In an actual application process, a high-power MOS transistor and/or a large-capacity capacitor are/is generally required for normal operation, but the size of the high-power MOS transistor and the large-capacity capacitor are generally very large, which may significantly increase the area of the PCB and limit the size of the atomizer.

### SUMMARY

The present disclosure provides an atomizer, a battery rod, and an electronic atomizing device, which may implement communication between the battery rod and the atomizer, and further determine whether the battery rod matches the atomizer.

To resolve the foregoing technical problem, a first technical solution provided in the present disclosure is to provide an atomizer. The atomizer includes a first connection end and a second connection end configured to be connected to a battery rod when the atomizer is inserted into the battery rod. The includes further includes an anti-counterfeiting circuit connected to the first connection end and the second connection end. The anti-counterfeiting circuit is configured to receive a first communication signal from the battery rod through the first connection end, is configured to send a second communication signal to the battery rod through the first connection end, and is configured to implement communication between the battery rod and the atomizer. The first communication signal includes a first level signal served as a logic high level and a second level signal served as a logic low level; the second communication signal includes a third level signal served as a logic high level and a fourth level signal served as a logic low level; and the second level signal and the fourth level signal are greater than a power supply voltage of an anti-counterfeiting circuit.

In some embodiments, the first level signal is greater than or equal to the third level signal, the fourth level signal is greater than or equal to the second level signal, and the third level signal is greater than the second level signal.

In some embodiments, the first level signal is greater than or equal to the third level signal, the fourth level signal is less than the second level signal, and the third level signal is greater than or equal to the second level signal.

In some embodiments, the second level signal is greater than the third level signal.

In some embodiments, the anti-counterfeiting circuit includes a signal source. The signal source is connected to the first connection end and the second connection end, and the signal source works in a first state or a second state to send the second communication signal to the battery rod.

In some embodiments, the anti-counterfeiting circuit further includes a processing unit including a first control interface configured to output a first control signal. The signal source is connected to the first control interface, and the first control signal is used to drive the signal source to work in the first state or the second state.

In some embodiments, the atomizer further includes a heating element. The heating element is connected to the signal source in parallel, and the heating element and the signal source are disposed between the first connection end and the second connection end; when the signal source works in the first state, a voltage on the first connection end is maintained at the third level signal; and when the signal source works in the second state, the voltage on the first connection end is maintained at the fourth level signal.

In some embodiments, the processing unit includes a second control interface configured to output a second control signal. The atomizer further includes a direction switching circuit. The direction switching circuit is connected to the second control interface, is connected to the heating element in parallel, and is configured to implement forward or reverse insertion of the atomizer into the battery rod under driving of the second control signal.

In some embodiments, the anti-counterfeiting circuit is configured to be integrated and packaged as independent element.

To resolve the foregoing technical problem, a second technical solution provided in the present disclosure is to provide a battery rod. The battery rod includes a first connection end and a second connection end, configured to be connected to an atomizer inserted into the battery rod. The battery rod further includes a control unit connected to the first connection end, is configured to send a first communication signal to the atomizer inserted into the battery rod, is configured receive a second communication signal from the atomizer through the first connection end, and is configured to implement communication between the battery rod and the atomizer. The first communication signal includes a first level signal served as a logic high level and a second level signal served as a logic low level; the second communication signal includes a third level signal served as a logic high level and a fourth level signal served as a logic low level; and the second level signal and the fourth level signal are greater than a power supply voltage of an anti-counterfeiting circuit.

In some embodiments, the first level signal is greater than or equal to the third level signal, the fourth level signal is greater than or equal to the second level signal, and the third level signal is greater than the second level signal.

In some embodiments, the first level signal is greater than or equal to the third level signal, the fourth level signal is less than or equal to the second level signal, and the third level signal is greater than or equal to the second level signal.

In some embodiments, the second level signal is greater than the third level signal.

In some embodiments, the battery rod further includes a first voltage unit, connected to the control unit and the first connection end, and configured to send the first level signal to the atomizer; and a second voltage unit, connected to the control unit and the first connection end, and configured to send the second level signal to the atomizer.

In some embodiments, the first voltage unit includes a first switch including a first path end, a second path end, and a control end. The control end of the first switch is connected to a first driving end of the control unit to receive a first driving signal, the first path end of the first switch is configured to receive a battery voltage, and the second path end of the first switch is connected to the first connection end.

In some embodiments, the second voltage unit includes: a second switch, including a first path end, a second path end, and a control end. The control end of the second switch is connected to a second driving end of the control unit to receive a second driving signal, the second driving signal is a pulse width modulation (PWM) signal, and the first path end of the second switch is configured to receive the battery voltage; a first resistor, a first end of the first resistor is connected to the second path end of the second switch, and a second end of the first resistor is connected to the first connection end; and a first capacitor, a first end of the first capacitor is connected to the second path end of the second switch, and a second end of the first capacitor is grounded.

In some embodiments, the battery rod further includes a protection unit, connected to the second voltage unit and the first voltage unit, and configured to prevent a heating signal of the first connection end from being affected in a heating process.

In some embodiments, the protection unit includes: a third switch, including a first path end, a second path end, and a control end. The first path end of the third switch is connected to the second end of the first resistor, the control end of the third switch is connected to the control unit, and the second path end of the third switch is connected to the first connection end; or the protection unit includes: a first diode, the anode of the first diode is connected to the second end of the first resistor, and the cathode of the first diode is connected to the first connection end.

In some embodiments, the second voltage unit includes: a fourth switch, including a first path end, a second path end, and a control end. The control end of the fourth switch is connected to a second driving end of the control unit to receive a second driving signal, and the first path end of the fourth switch is connected to a power supply management chip to receive a voltage; and a second resistor, a first end of the second resistor is connected to the second path end of the fourth switch, and a second end of the second resistor is connected to the first connection end.

In some embodiments, the second voltage unit includes: a fifth switch, including a first path end, a second path end, and a control end. The control end of the fifth switch is connected to a second driving end of the control unit to receive a second driving signal, the second driving signal is a PWM signal, and the first path end of the fifth switch is configured to receive the battery voltage; a third resistor, a first end of the third resistor is connected to the second path end of the fifth switch, and a second end of the third resistor is connected to the first connection end; a sixth switch, including a first path end, a second path end, and a control end. The control end of the sixth switch is connected to a third driving end of the control unit to receive a third driving signal, and the first path end of the sixth switch is configured to receive the battery voltage; and a fourth resistor, a first end of the fourth resistor is connected to the second path end of the sixth switch, and a second end of the fourth resistor is connected to the first connection end.

In some embodiments, the second voltage unit includes a seventh switch including a first path end, a second path end, and a control end. The control end of the seventh switch is connected to a second driving end of the control unit to receive a second driving signal, the second driving signal is a level signal, and the first path end of the seventh switch is configured to receive the battery voltage; and a fifth resistor, a first end of the fifth resistor is connected to the second path end of the seventh switch, and a second end of the fifth resistor is connected to the first connection end.

In some embodiments, the second voltage unit includes: a first comparator, including a first input end, a second input end, and an output end. The first input end of the first comparator is configured to receive a reference voltage, and the second input end of the first comparator is connected to the first connection end; an eighth switch, including a first path end, a second path end, and a control end. The control end of the eighth switch is connected to the output end of the first comparator, and the first path end of the eighth switch is configured to receive the battery voltage; and a sixth resistor, a first end of the sixth resistor is connected to the second path end of the eighth switch, and a second end of the sixth resistor is connected to the first connection end.

In some embodiments, the battery rod further includes: a signal identification unit, connected to a signal acquisition end of the control unit and the first connection end, and configured to identify the second communication signal and feed back an identification result to the signal acquisition end.

In some embodiments, the signal identification unit includes: a second comparator, including a first input end, a second input end, and an output end. The output end of the second comparator is connected to the signal acquisition end of the control unit.

In some embodiments, the signal identification unit includes: an operational amplifier, including a first input end, a second input end, and an output end. The output end of the operational amplifier is connected to the signal acquisition end of the control unit.

In some embodiments, the signal identification unit is an analog-to-digital converter, and the signal identification unit is integrated in the control unit.

To resolve the foregoing technical problem, a third technical solution provided in the present disclosure is to provide an electronic atomizing device including any one of the atomizers mentioned above and any one of the battery rods mentioned above.

Technical effects of the present disclosure are provided compared with the related art. The anti-counterfeiting circuit is disposed in the atomizer of the present disclosure, the anti-counterfeiting circuit is connected to the first connection end and the second connection end of the atomizer, in this way, the anti-counterfeiting circuit is configured to receive a first communication signal from a battery rod and send a second communication signal to the battery rod through the first connection end, thereby implementing communication between the battery rod and the atomizer.

### BRIEF DESCRIPTION OF THE DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and a person of ordinary skill in the art may still derive other accompanying drawings from these accompanying drawings without creative efforts.
FIG. 1 is a schematic diagram of functional modules of a first embodiment of an atomizer according to the present disclosure.
FIG. 2 is a schematic diagram of functional modules of a first embodiment of a battery rod according to the present disclosure.
FIG. 3 is a schematic diagram of functional modules of an electronic atomizing device formed through connection of the atomizer shown in FIG. 1 and the battery rod shown in FIG. 2.
FIG. 4 is a schematic diagram of waveforms of a first embodiment of a first communication signal and a second communication signal according to the present disclosure.
FIG. 5 is a schematic diagram of waveforms of a second embodiment of a first communication signal and a second communication signal according to the present disclosure.
FIG. 6 is a schematic diagram of waveforms of a third embodiment of a first communication signal and a second communication signal according to the present disclosure.
FIG. 7 is a schematic structural diagram of a first embodiment of the battery rod shown in FIG. 2.
FIG. 8 is a schematic diagram of a waveform of a second communication signal identified by a signal identification unit in FIG. 7.
FIG. 9 is a schematic structural diagram of a second embodiment of the battery rod shown in FIG. 2.
FIG. 10 is a schematic structural diagram of a third embodiment of the battery rod shown in FIG. 2.
FIG. 11 is a schematic structural diagram of a fourth embodiment of the battery rod shown in FIG. 2.
FIG. 12 is a schematic structural diagram of a fifth embodiment of the battery rod shown in FIG. 2.
FIG. 13 is a schematic structural diagram of a sixth embodiment of the battery rod shown in FIG. 2.
FIG. 14 is a schematic structural diagram of a seventh embodiment of the battery rod shown in FIG. 2.
FIG. 15 is a schematic structural diagram of an embodiment of an electronic atomizing device according to the present disclosure.
FIG. 16a and FIG. 16b are schematic structural diagrams of a first embodiment of an atomizer according to the present disclosure.
FIG. 17 is a schematic structural diagram of a second embodiment of an atomizer according to the present disclosure.
FIG. 18a and FIG. 18b are schematic structural diagrams of a third embodiment of an atomizer according to the present disclosure.
FIG. 19a and FIG. 19b are schematic structural diagrams of a fourth embodiment of an atomizer according to the present disclosure.
FIG. 20a and FIG. 20b are schematic structural diagrams of a fifth embodiment of an atomizer according to the present disclosure.
FIG. 21 is a schematic structural diagram of a sixth embodiment of an atomizer according to the present disclosure.
FIG. 22a and FIG. 22b are schematic structural diagrams of a seventh embodiment of an atomizer according to the present disclosure.
FIG. 23 is a schematic structural diagram of an eighth embodiment of an atomizer according to the present disclosure.
FIG. 24a and FIG. 24b are schematic structural diagrams of a ninth embodiment of an atomizer according to the present disclosure.
FIG. 25a and FIG. 25b are schematic structural diagrams of a tenth embodiment of an atomizer according to the present disclosure.
FIG. 26 is a schematic structural diagram of an eleventh embodiment of an atomizer according to the present disclosure.
FIG. 27a and FIG. 27b are schematic structural diagrams of a twelfth embodiment of an atomizer according to the present disclosure.
FIG. 28a to FIG. 28c are schematic structural diagrams of a thirteenth embodiment of an atomizer according to the present disclosure.

### DETAILED DESCRIPTION

The technical solutions in the embodiments of the present disclosure are clearly and completely described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

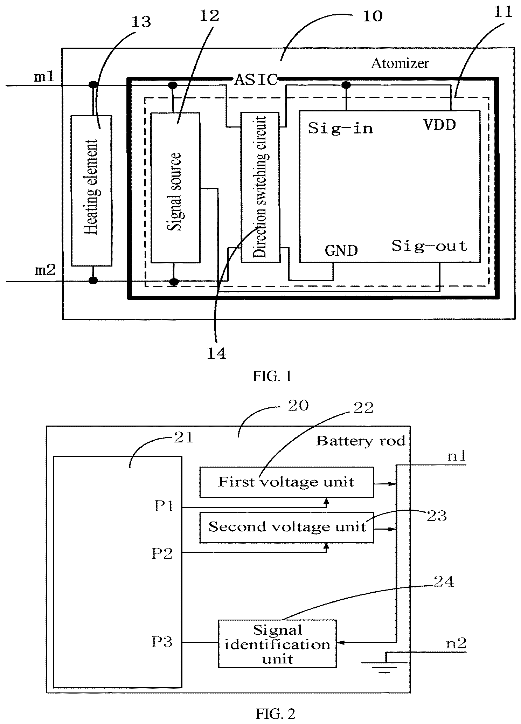

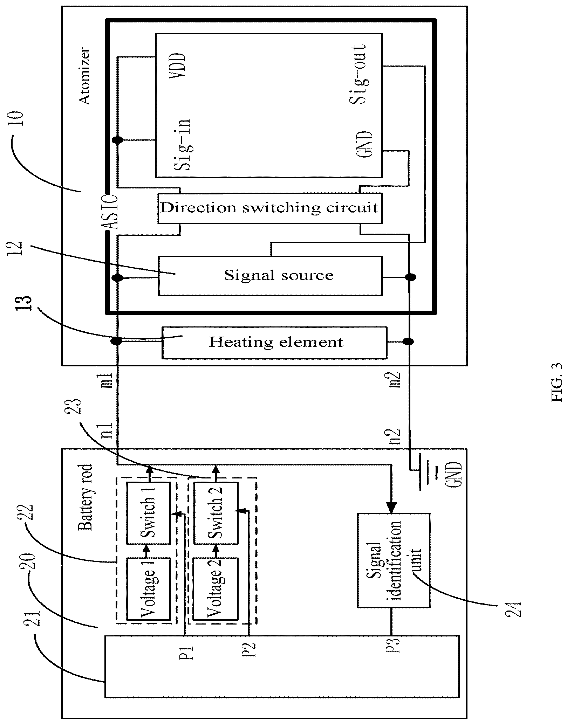

Referring to FIG. 1 and FIG. 2, FIG. 1 is a schematic diagram of functional modules of an embodiment of an atomizer 10 according to the present disclosure, and FIG. 2 is a schematic diagram of functional modules of a first embodiment of a battery rod 20 according to the present disclosure. The atomizer 10 includes a first connection end m1 and a second connection end m2. When the atomizer 10 is inserted into the battery rod 20 to be connected to the battery rod 20, the first connection end m1 and the second connection end m2 are respectively connected to a first connection end n1 and a second connection end n2 in the battery rod 20. As shown in FIG. 3, FIG. 3 is a schematic diagram of functional modules of an embodiment of an electronic atomizing device formed through connection of the atomizer 10 shown in FIG. 1 and the battery rod 20 shown in FIG. 2. It may be understood that, the first connection end m1/n1 and the second connection end m2/n2 correspond to a positive electrode and a negative electrode of the atomizer 10/the battery rod 20 respectively.

As shown in FIG. 1, the atomizer 10 further includes an anti-counterfeiting circuit 11. The anti-counterfeiting circuit 11 is connected to the first connection end m1 and the second connection end m2, and the anti-counterfeiting circuit 11 receives a first communication signal from the battery rod 20 and sends a second communication signal to the battery rod 20 through the first connection end m1, to implement communication between the battery rod 20 and the atomizer 10. When the battery rod 20 is connected to the atomizer 10, the first connection end m1 of the atomizer 10 receives the first communication signal from the battery rod 20, and the atomizer 10 sends the second communication signal to the battery rod 20 through the first connection end m1 after receiving the first communication signal, to implement communication between the battery rod 20 and the atomizer 10, and further determine whether the battery rod 20 matches the atomizer 10.

In some embodiment, the anti-counterfeiting circuit 11 is integrated on an anti-counterfeiting chip ASIC. In the related art, an encryption function of an electronic atomizing device is implemented through a circuit board, namely, a PCB. However, in an actual application process, a high-power MOS transistor and/or a large-capacity capacitor are/is generally required for normal operation, but the size of the high-power MOS transistor or the large-capacity capacitor is generally very large, which may significantly increase the area of the PCB and limit the size of the atomizer 10. In addition, due to limitation of the area of the PCB, the assembly difficulty may be increased. In the present disclosure, the anti-counterfeiting circuit 11 is integrated on the anti-counterfeiting chip ASIC. The anti-counterfeiting chip ASIC may be a wafer, which has a feature of a small volume and may be independently packaged as an independent element. Therefore, the structure of PCB is replaced by the anti-counterfeiting chip ASIC, to achieve an objective of reducing costs. Further, during assembly, the anti-counterfeiting circuit may be assembled at any position in the atomizer 10 without being limited by the volume, thereby reducing the assembly difficulty.

The atomizer 10 further includes a heating element 13. The heating element 13 is connected to the anti-counterfeiting circuit 11 in parallel. The heating element 13 is connected to the first connection end m1 and the second connection end m2 of the atomizer 10. The anti-counterfeiting circuit 11 includes a signal source 12, and the signal source 12 is connected to the first connection end m1 and the second connection end m2. That is, the signal source 12 is connected to the heating element 13 in parallel. The signal source 12 works in a first state or a second state to send the second communication signal to the battery rod 20. In the present disclosure, the signal source 12 is disposed on the anti-counterfeiting circuit 11 with the encryption function, in this way, the signal source 12 works in the first state or the second state to send the second communication signal to the battery rod 20 to further implement communication between the battery rod 20 and the atomizer 10. Components such as the high-power MOS transistor, the large-capacity capacitor, and the PCB are not used, and the anti-counterfeiting circuit 11 is integrated on the anti-counterfeiting chip ASIC to form an independent element, in this way, the size of the atomizer 10 may be further reduced, thereby reducing costs. A main function of the signal source 12 is to generate voltage signals with different amplitudes in two different working states, the signal source 12 may be a constant current source or may be a load, and the load may be a resistor, a transistor, a MOS transistor, or a diode, etc.

The anti-counterfeiting circuit 11 further includes a processing unit CPU. The processing unit CPU includes a first control interface Sig-out configured to output a first control signal. The signal source is 12 is connected to the first control interface Sig-out and works in the first state or the second state under driving of the first control signal.

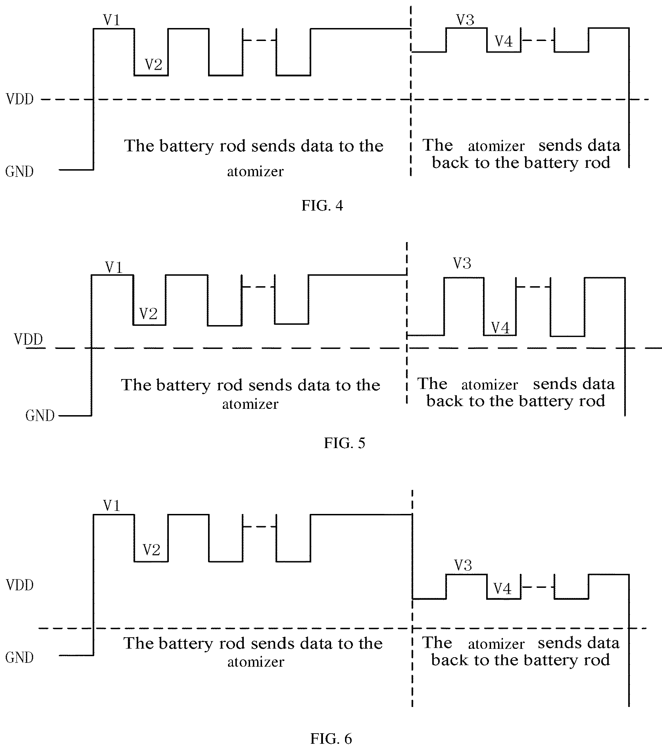

After the atomizer 10 receives the first communication signal, the processing unit CPU outputs the first control signal through the first control interface Sig-out to drive the signal source 12 to work in the first state. In this case, the signal source 12 is in a non-working state. As shown in FIG. 4, FIG. 5, and FIG. 6, a voltage on the two ends (namely, the first connection end n1/m1) of the heating element 13 is a third level signal V3 with a logic high level, thereby implementing sending of data " 1" from the atomizer 10 to the battery rod 20. The processing unit CPU outputs the first control signal through the first control interface Sig-out to drive the signal source 12 to work in the second state. In this case, the signal source 12 is in a working state, and the signal source 12 is connected to the heating element 13 in parallel. As shown in FIG. 3, the divider voltage between the signal source 12 and internal resistance of a switch 1 in the battery rod 20 is reduced, and a value of the voltage on the two ends (namely, the first connection end n1/m1) of the heating element 13 is reduced. In addition, as shown in FIG. 4, FIG. 5, and FIG. 6, the voltage is a fourth level signal V4 with a logic low level, thereby implementing sending of data "0" from the atomizer 10 to the battery rod 20.

As shown in FIG. 2, the battery rod 20 includes a first connection end n1 and a second connection end n2, configured to be connected to the atomizer 10 inserted into the battery rod 20. The battery rod 20 further includes a control unit 21, and the control unit 21 is connected to the first connection end n1, to send the first communication signal to the atomizer 10 inserted into the battery rod 20 through the first connection end n1 and receive the second communication signal from the atomizer 10 through the first connection end n1, to implement communication between the battery rod 20 and the atomizer 10. The second communication signal is received when the signal source 12 in the atomizer 10 works in the first state or the second state. When the signal source 12 works in the first state, the signal source 12 does not work. In this case, the voltage on the two ends (namely, the first connection end n1/m1) of the heating element 13 is the third level signal V3 with a logic high level, thereby implementing sending of data "1" from the atomizer 10 to the battery rod 20. When the signal source 12 is driven to work in the second state, the signal source 12 is in a working state, the signal source 12 is connected to the heating element 13 in parallel, the divider voltage between the signal source and the internal resistance of the switch 1 in the battery rod 20 is reduced, and the value of the voltage on the two ends (namely, the first connection end n1/m1) of the heating element 13 is reduced to be the fourth level signal V4 with a logic low level, thereby implementing sending of data "0" from the atomizer 10 to the battery rod 20.

As shown in FIG. 4, FIG. 5, and FIG. 6, the first communication signal includes a first level signal V1 with a logic high level and a second level signal V2 with a logic low level. The second communication signal includes a third level signal V3 with a logic high level and a fourth level signal V4 with a logic low level. When the atomizer 10 is connected to the battery rod 20, the battery rod 20 sends the first level signal V1 with a logic high level and the second level signal V2 with a logic low level which are served as the first communication signal to the atomizer 10. After receiving the first communication signal, the atomizer 10 sends the third level signal V3 with a logic high level and the fourth level signal V4 with a logic low level to the battery rod 20.

The battery rod 20 further includes a first voltage unit 22 and a second voltage unit 23. The first voltage unit 22 is connected to the control unit 21 and the first connection end n1, to send the first level signal V1 to the atomizer 10. The second voltage unit 23 is connected to the control unit 21 and the first connection end n1, to send the second level signal V2 to the atomizer 10.

Referring to FIG. 3, the first voltage unit 22 includes a switch 1, and may output a voltage 1. The second voltage unit 23 includes a switch 2, and may output a voltage 2. Turn-on and turn-off of the switch 1 and the switch 2 are controlled by the control unit 21. When the switch 1 is turned on, the battery rod 20 sends the first level signal V1 with a logic high level to the atomizer 10 through the first connection end n1, to implement sending of data " 1". When the switch 2 is turned on, the battery rod 20 sends the second level signal V2 with a logic low level to the atomizer 10 through the first connection end n1, to implement sending of data "0".

In an embodiment, when the signal source 12 works in the first state, a voltage on the first connection end n1 is maintained at the third level signal V3. When the signal source 12 works in the second state, the voltage on the first connection end n1 is maintained at the fourth level signal V4. After the atomizer 10 receives the first communication signal, the processing unit CPU outputs the first control signal through the first control interface Sig-out to drive the signal source 12 to work in the first state. In this case, the signal source 12 is in a non-working state, the voltage on the two ends (namely, the first connection end n1/m1) of the heating element 13 is the third level signal V3 with a logic high level, thereby implementing sending of data "1" from the atomizer 10 to the battery rod 20. The processing unit CPU outputs the first control signal through the first control interface Sig-out to drive the signal source 12 to work in the second state. In this case, the signal source 12 is in a working state, the signal source 12 is connected to the heating element 13 in parallel, the divider voltage between the signal source and the internal resistance of the switch 1 is reduced, and the value of the voltage on the two ends (namely, the first connection end n1/m1) of the heating element 13 is reduced to be the fourth level signal V4 with a logic low level, thereby implementing sending of data "0" from the atomizer 10 to the battery rod 20.

Further, the battery rod 20 further includes a signal identification unit 24. The signal identification unit 24 is connected to a signal acquisition end P3 of the control unit 21 and the first connection end n1, and configured to acquire the second communication signal, identify the second communication signal, and feed back an identification result to the signal acquisition end P3, thereby enabling the battery rod 20 to determine whether the atomizer 10 matches the battery rod according to the identification result. The signal identification unit 24 acquires the voltage signal on the first connection end n1 and identifies the voltage signal, to determine whether the acquired voltage signal is the third level signal V3 with a logic high level or the fourth level signal V4 with a logic low level, and further determine whether a received data signal is "1" or "0", feeds back the identification result to the signal acquisition end P3, and further determines whether the current atomizer 10 matches the battery rod 20 through the control unit 21. As shown in FIG. 3, the second connection end n2 of the battery rod 20 is grounded.

In an embodiment, as shown in FIG. 4, the first level signal V1 is greater than or equal to the third level signal V3, the fourth level signal V4 is greater than or equal to the second level signal V2, and the third level signal V3 is greater than the second level signal V2. FIG. 4 is only an example in which the first level signal V1 is greater than the third level signal V3, the fourth level signal V4 is greater than the second level signal V2, and the third level signal V3 is greater than the second level signal V2. In another embodiment, the voltage difference between the first level signal V1 and the second level signal V2 is greater than the voltage difference between the third level signal V3 and the fourth level signal V4. Optionally, the second level signal V2 is less than the fourth level signal V4. In this case, a current required by the anti-counterfeiting chip ASIC is relatively small, and a demodulation data circuit of the anti-counterfeiting chip ASIC is simpler, in this way, the costs of the anti-counterfeiting chip ASIC is lower, and the design of the anti-counterfeiting chip ASIC is simpler.

In another embodiment, as shown in FIG. 5, the first level signal V1 is greater than or equal to the third level signal V3, the fourth level signal V4 is less than the second level signal V2, and the third level signal V3 is greater than or equal to the second level signal V2. FIG. 5 is only an example in which the first level signal V1 is equal to the third level signal V3, the fourth level signal V4 is less than the second level signal V2, and the third level signal V3 is greater than the second level signal V2. In another embodiment, the voltage difference between the first level signal V1 and the second level signal V2 is less than the voltage difference between the third level signal V3 and the fourth level signal V4. Optionally, the fourth level signal V4 is less than the second level signal V2. In this case, when the atomizer 10 returns the second communication signal, the voltage difference between high and low level signals is great, in this way, a communication anti-interference capability may be enhanced, which helps simplify a processing circuit for receiving signals of the battery rod 20, for example, simplify the signal identification unit 24.

In another embodiment, as shown in FIG. 6, the second level signal V2 is greater than the third level signal V3.

In embodiments of the present disclosure, the level signal sent by the battery rod 20 to the atomizer 10 and the level signal sent by the atomizer 10 to the battery rod 20 are both greater than a power supply voltage VDD. That is, the first level signal V1, the second level signal V2, the third level signal V3, and the fourth level signal V4 are all greater than the power supply voltage VDD of the anti-counterfeiting chip ASIC. In this way, power may be supplied to the anti-counterfeiting chip ASIC, and therefore no power supply capacitor is disposed in the anti-counterfeiting chip ASIC. A power supply interface VDD connected to the first connection end m1 is further disposed in the anti-counterfeiting chip ASIC. When the battery rod 20 communicates with the atomizer 10 through the first connection end m1, the battery rod 20 and the atomizer 10 may supply power to the anti-counterfeiting chip ASIC through the first connection end m1 simultaneously.

Further, the atomizer 10 further includes a direction switching circuit 14. The direction switching circuit 14 is connected to a second control interface Sig-in of the processing unit CPU, and the direction switching circuit 14 is connected to the heating element 13 in parallel and configured to implement forward or reverse insertion of the atomizer 10 into the battery rod 20 under driving of a second control signal. The direction switching circuit 14 in this embodiment and a direction switching circuit in the related art have a same structure, and details are not described herein again.

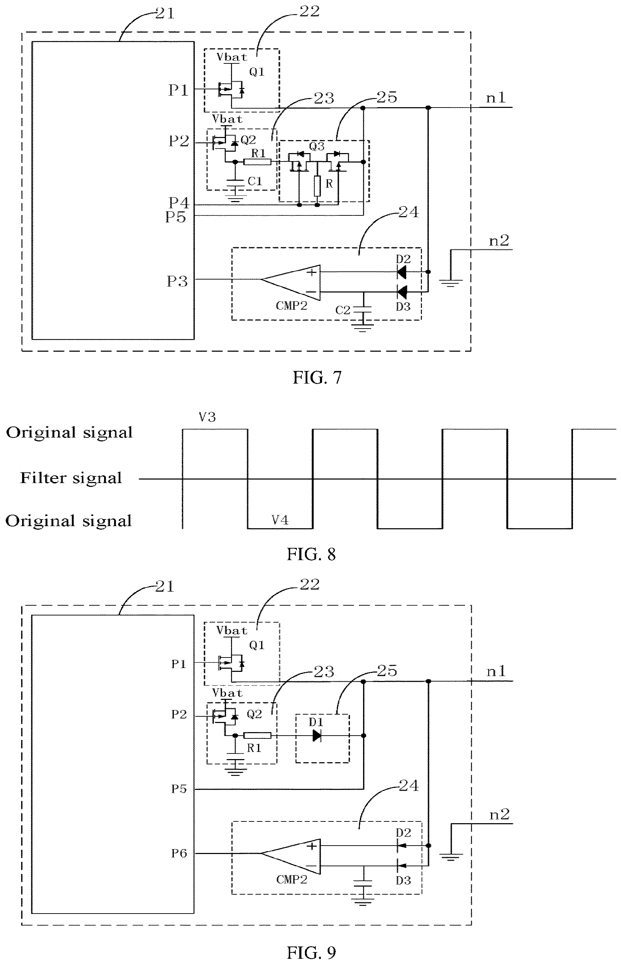

Referring to FIG. 7, FIG. 7 is a schematic structural diagram of a first embodiment of the battery rod 20 shown in FIG. 2. The first voltage unit 22 includes a first switch Q1. The first switch Q1 includes a first path end, a second path end, and a control end. The control end of the first switch Q1 is connected to a first driving end P1 to receive a first driving signal, the first path end of the first switch Q1 receives a battery voltage V_{bat} outputted by a battery, and the second path end of the first switch Q1 is connected to the first connection end n1.

The second voltage unit 23 includes a second switch Q2, a first resistor R1, and a first capacitor C1. The second switch Q2 includes a first path end, a second path end, and a control end. The control end of the second switch Q2 is connected to a second driving end P2 to receive a second driving signal which is a pulse width modulation (PWM) signal, and the first path end of the second switch Q2 receives the battery voltage V_{bat}. A first end of the first resistor R1 is connected to the second path end of the second switch Q2, and a second end of the first resistor R1 is connected to the first connection end n1. A first end of the first capacitor C1 is connected to the second path end of the second switch Q2, and a second end of the first capacitor C1 is grounded.

When the first driving signal outputted by the first driving end P1 of the control unit 21 controls the first switch Q1 to be turned on, the first voltage unit 22 sends the first level signal V1 to the atomizer 10 through the battery voltage V_{bat}. When the second driving signal outputted by the second driving end P2 of the control unit 21 controls the second switch Q2 to be turned on, the second voltage unit 23 sends the second level signal V2 to the atomizer 10 through the battery voltage V_{bat}. The second driving signal is a PWM signal, the second switch Q2 may be served as a small switch power supply, and a PWM signal controls turn-on/turn-off of the second switch Q2 to output a constant voltage value. Since the battery voltage V_{bat} may gradually decrease along with a working duration of the battery, the duty cycle and the frequency of the PWM signal may be controlled by a change value of the battery voltage V_{bat}, and a voltage value on the second level signal V2 sent by the second voltage unit 23 may be further controlled, thereby ensuring that the voltage difference between the first level signal V1 and the second level signal V2 is greater than the minimum voltage difference such as 0.7 V that may be identified by the anti-counterfeiting chip ASIC.

When the heating element 13 is heated, a PWM signal needs to be outputted to the heating element 13 through the first switch Q1. Since the first capacitor C1 has a relatively great capacitance value, during heating, a PWM waveform of the second path end (that is, the first connection end n1) of the first switch Q1 deforms. Further, in this embodiment, the battery rod 20 further includes a protection unit 25, and the protection unit 25 is connected to the second voltage unit 23 and the first voltage unit 22 and configured to prevent a heating signal of the first connection end n1 from being affected in a heating process.

In this embodiment, the protection unit 25 includes a third switch Q3. The third switch Q3 is a dual-gate transistor, and includes a first path end, a second path end, and a control end. The first path end of the third switch Q3 is connected to the second end of the first resistor R1, the control end of the third switch Q3 is connected to a P4 end of the control unit 21, and the second path end of the third switch Q3 is connected to the first connection end n1. Further, the control end of the third switch Q3 is further connected to a resistor R. When the battery rod 20 heats the atomizer 10, the P4 end of the control unit 21 controls the third switch Q3 to be turned off, to cut off the path between the first switch Q1 and the first capacitor C1, and further prevent influence of the first capacitor C1 on the first switch Q1 during heating.

In this embodiment, the signal identification unit 24 includes a second comparator CMP2, a second diode D2, a third diode D3, and a second capacitor C2. The second comparator CMP2 includes a first input end, a second input end, and an output end. The output end of the second comparator CMP2 is connected to a signal acquisition end P3 of the control unit 21. The anode of the second diode D2 is connected to the first connection end n1, and the cathode of the second diode D2 is connected to the first input end of the second comparator CMP2. The anode of the third diode D3 is connected to the first connection end n1, and a cathode of the third diode D3 is connected to the second input end of the second comparator CMP2. A first end of the second capacitor C2 is connected to the cathode of the third diode D3, and a second end of the second capacitor C2 is grounded.

After the signal identification unit 24 acquires the second communication signal on the first connection end n1, the second communication signal is divided into two channels of signals through the second diode D2 and the third diode D3. A signal passing through the second diode D2 is an original signal, and a signal passing through the third diode D3 is filtered through the second capacitor C2 to form a filter signal. The second comparator CMP2 compares the original signal with the filter signal, to identify whether a current obtained signal is the third level signal V3 or the fourth level signal V4. As shown in FIG. 8, when the original signal is greater than the filter signal, which indicates that the current obtained signal is the third level signal V3. When the original signal is less than the filter signal, which indicates that the current obtained signal is the fourth level signal V4.

Further, the control unit 21 further includes a port P5 connected to the first connection end n1. The port P5 may be an analog-to-digital converter ADC carried in the control unit 21, which may detect a voltage value on the first connection end n1, and the voltage value on the first connection end n1 is equal to a voltage value on the heating element 13, in this way, the temperature of the heating element 13 may be obtained according to the voltage value on the first connection end n1. The battery rod 20 may further control the heating element 13 according to the temperature of the heating element 13. For example, when the temperature is excessively high, power may be properly reduced to reduce the temperature; and when the temperature is excessively low, power may be properly increased to increase the temperature.

Referring to FIG. 9, FIG. 9 is a schematic structural diagram of a second embodiment of the battery rod 20 shown in FIG. 2. Compared with the first embodiment shown in FIG. 7, a difference lies in that: in this embodiment, the protection unit 25 includes a first diode D1. The anode of the first diode D1 is connected to the second end of the first resistor R1, and the cathode of the first diode D1 is connected to the first connection end n1. A diode may be turned on in a direction from an anode to a cathode, in this way, influence of the first capacitor C1 on the first switch Q1 during heating may be prevented.

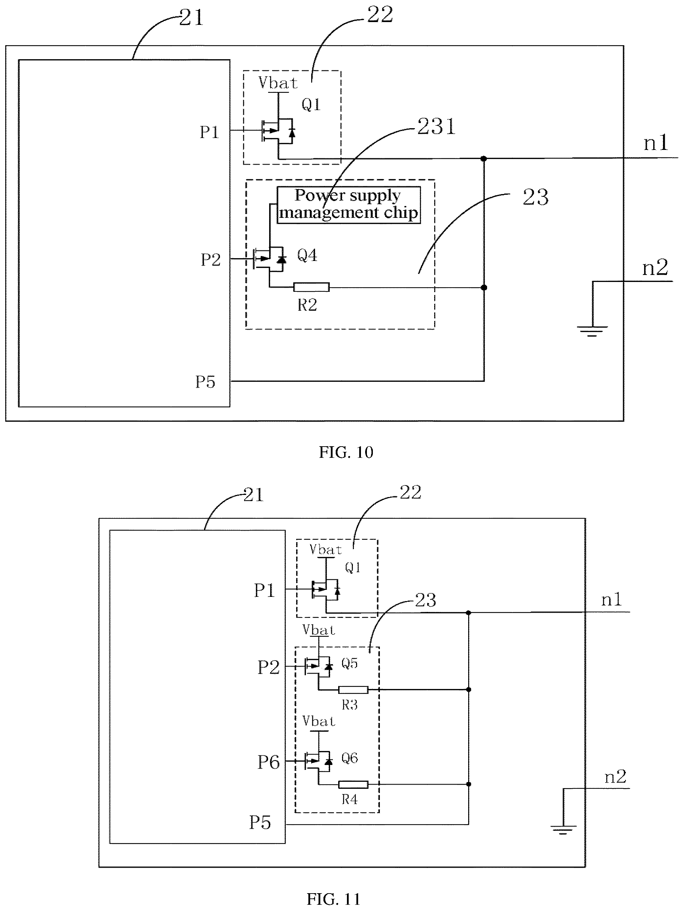

Referring to FIG. 10, FIG. 10 is a schematic structural diagram of a third embodiment of the battery rod 20 shown in FIG. 2. Compared with the first embodiment shown in FIG. 7, a difference lies in that: in this embodiment, the second voltage unit 23 includes a fourth switch Q4 and a second resistor R2. The fourth switch Q4 includes a first path end, a second path end, and a control end. The control end of the fourth switch Q4 is connected to the second driving end P2 to receive the second driving signal, and the first path end of the fourth switch Q4 is connected to a power supply management chip 231 to receive a voltage value outputted by the power supply management chip 231. A first end of the second resistor R2 is connected to the second path end of the fourth switch Q4, and a second end of the second resistor R2 is connected to the first connection end n1. In this embodiment, the fourth switch Q4 is connected to the power supply management chip 231, for example, a switch power supply chip or a DC-DC chip, etc., in this way, a constant voltage may be directly provided, and the voltage may not decrease as use duration increases. In this embodiment, no capacitor needs to be disposed in the second voltage unit 23, and therefore the protection unit 25 does not need to be disposed. Further, the port P5 in this embodiment is the analog-to-digital converter ADC carried in the control unit 21 which is served as the signal identification unit 24. The port P5 is connected to the first connection end n1, in this way, the voltage value on the first connection end n1 may be detected, and the voltage value on the first connection end n1 is equal to the voltage value on the heating element 13. Therefore, the temperature of the heating element 13 may be obtained according to the voltage value on the first connection end n1. In addition, the port P5 may further detect the second communication signal on the first connection end n1. After the second communication signal is detected, the second communication signal is identified, and the third level signal V3 or the fourth level signal V4 is further obtained.

Referring to FIG. 11, FIG. 11 is a schematic structural diagram of a fourth embodiment of the battery rod 20 shown in FIG. 2. Compared with the third embodiment shown in FIG. 10, a difference lies in that: in this embodiment, the second voltage unit 23 includes a fifth switch Q5, a third resistor R3, a sixth switch Q6, and a fourth resistor R4. The fifth switch Q5 includes a first path end, a second path end, and a control end. The control end of the fifth switch Q5 is connected to the second driving end P2 to receive the second driving signal which is a PWM signal, and the first path end of the fifth switch Q5 receives the battery voltage V_{bat} outputted by the battery. A first end of the third resistor R3 is connected to the second path end of the fifth switch Q5, and a second end of the third resistor R3 is connected to the first connection end n1. The sixth switch Q6 includes a first path end, a second path end, and a control end. The control end of the sixth switch Q6 is connected to a third driving end P6 to receive a third driving signal, and the first path end of the sixth switch Q6 receives the battery voltage V_{bat} outputted by the battery. A first end of the fourth resistor R4 is connected to the second path end of the sixth switch Q6, and a second end of the fourth resistor R4 is connected to the first connection end n1.

In this embodiment, turn-on of the fifth switch Q5 or the sixth switch Q6 may be selected according to a voltage value on the battery voltage V_{bat}. When the battery voltage V_{bat} provided by the fifth switch Q5 is greater than a predetermined value, the fifth switch Q5 is turned on, and the fifth switch Q5 outputs the second level signal V2 through the battery voltage V_{bat}. When the battery voltage V_{bat} provided by the fifth switch Q5 is less than the predetermined value, the sixth switch Q6 is turned on, in this way, the constant second level signal V2 decreases, thereby ensuring that the difference between the battery voltage V_{bat} and the second level signal V2 is maintained within a predetermined range.

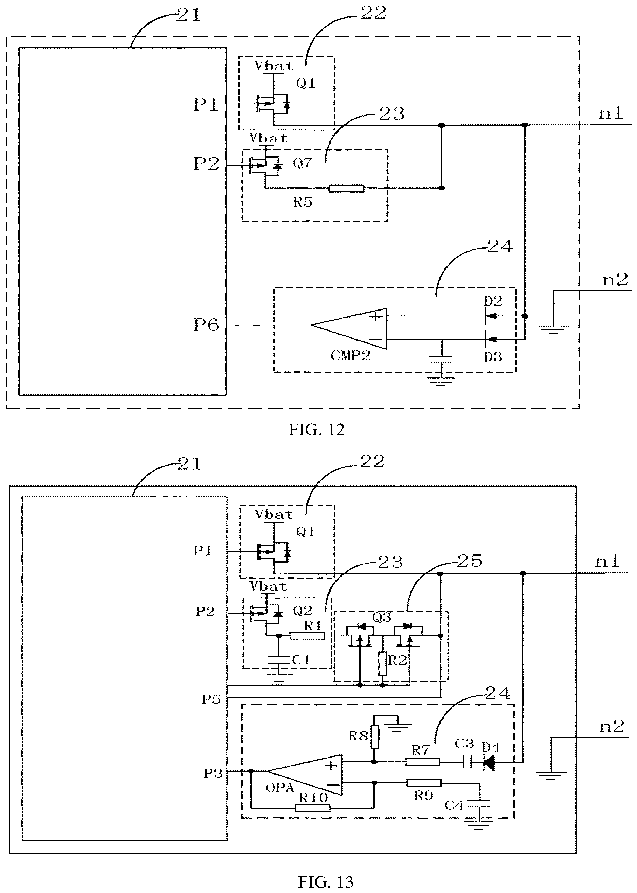

FIG. 12 is a schematic structural diagram of a fifth embodiment of the battery rod 20 shown in FIG. 2. Compared with the second embodiment shown in FIG. 9, a difference lies in that: in this embodiment, the second voltage unit 23 includes a seventh switch Q7 and a fifth resistor R5. The seventh switch Q7 includes a first path end, a second path end, and a control end. The control end of the seventh switch Q7 is connected to the second driving end P2 to receive the second driving signal which is a level signal, and the first path end of the seventh switch Q7 receives the battery voltage V_{bat} of the battery. A first end of the fifth resistor R5 is connected to the second path end of the seventh switch Q7, and a second end of the fifth resistor R5 is connected to the first connection end n1.

In this embodiment, the second driving signal is a level signal, when the first switch Q1 is turned on, the first level signal V1 is sent to the atomizer 10. When the seventh switch Q7 is turned on, the second level signal V2 is sent to the atomizer 10.

Referring to FIG. 13, FIG. 13 is a schematic structural diagram of a sixth embodiment of the battery rod 20 shown in FIG. 2. Compared with the first embodiment shown in FIG. 7, a difference lies in that: in this embodiment, the signal identification unit 24 includes an operational amplifier OPA, a seventh resistor R7, an eighth resistor R8, a ninth resistor R9, a tenth resistor R10, a third capacitor C3, a fourth capacitor C4, and a fourth diode D4. The operational amplifier OPA includes a first input end, a second input end, and an output end. The output end of the operational amplifier OPA is connected to the signal acquisition end P3 of the control unit 21. A first end of the seventh resistor R7 is connected to the first input end of the operational amplifier OPA. A first end of the eighth resistor R8 is connected to the first input end of the operational amplifier OPA, and a second end of the eighth resistor R8 is grounded. A first end of the ninth resistor R9 is connected to the second input end of the operational amplifier OPA, and a second end of the ninth resistor R9 is grounded. A first end of the tenth resistor R10 is connected to the second input end of the operational amplifier OPA, and a second end of the tenth resistor R10 is connected to the output end of the operational amplifier OPA. A first end of the third capacitor C3 is connected to a second end of the seventh resistor R7. The anode of the fourth diode D4 is connected to the first connection end n1, and the cathode of the fourth diode D4 is connected to a second end of the third capacitor C3. A first end of the fourth capacitor C4 is connected to the second end of the ninth resistor R9, and a second end of the fourth capacitor C4 is grounded.

In this embodiment, the second communication signal sent by the atomizer 10 connected to the first connection end n1 is converted into an alternating current signal after the third capacitor C3 performs isolation direct current filtering by on the second communication signal. The operational amplifier OPA amplifies the alternating current signal to obtain high and low level signals. The control unit 21 identifies the third level signal V3 and the fourth level signal V4 according to the high and low level signals.

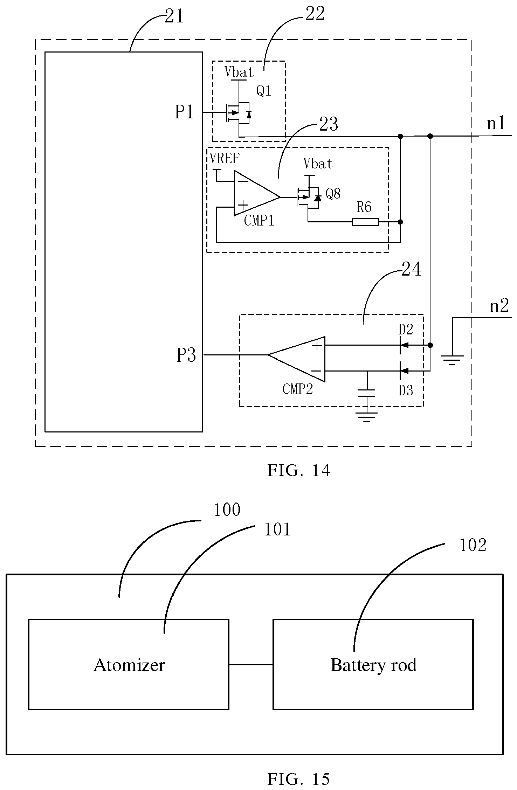

Referring to FIG. 14, FIG. 14 is a schematic structural diagram of a seventh embodiment of the battery rod 20 shown in FIG. 2. Compared with the fifth embodiment shown in FIG. 12, a difference lies in that: the second voltage unit 23 includes a first comparator CMP1, an eighth switch Q8, and a sixth resistor R6. The first comparator CMP1 includes a first input end, a second input end, and an output end. The first input end of the first comparator CMP1 receives a reference voltage VREF, and the second input end of the first comparator CMP1 is connected to the first connection end n1. The eighth switch Q8 includes a first path end, a second path end, and a control end. The control end of the eighth switch Q8 is connected to the output end of the first comparator CMP1, and the first path end of the eighth switch Q8 receives the battery voltage V_{bat} of the battery. A first end of the sixth resistor R6 is connected to the second path end of the eighth switch Q8, and a second end of the sixth resistor R6 is connected to the first connection end n1.

In this embodiment, the first comparator CMP1 obtains the first communication signal on the first connection end n1, and compares the first communication signal with the reference voltage VREF. When the first communication signal on the first connection end n1 is greater than the reference voltage VREF, the first comparator CMP1 controls the eighth switch Q8 to be turned off, to decrease the first communication signal to be close to the reference voltage VREF, and when the first communication signal on the first connection end n1 is less than the reference voltage VREF, the first comparator CMP1 controls the eighth switch Q8 to be turned on, to increase the first communication signal to be close to the reference voltage VREF, thereby implementing sending of the first level signal V1 and the second level signal V2 from the battery rod 20 to the atomizer 10.

Referring to FIG. 15, FIG. 15 is a schematic structural diagram of an embodiment of an electronic atomizing device according to the present disclosure. The electronic atomizing device 100 includes an atomizer 101 and a battery rod 102. The atomizer 101 is the atomizer 10 shown in FIG. 1, and the battery rod 102 is the battery rod 20 shown in any embodiment in FIG. 2 and FIG. 6 to FIG. 14. The battery rod 20 is configured to supply power to the atomizer 10, to atomize a to-be-atomized substrate in the atomizer 10. When the battery rod 20 is connected to the atomizer 10, the battery rod 20 sends a first communication signal to the atomizer 10, and the atomizer 10 feeds back a second communication signal to further determine whether the atomizer 10 matches the battery rod 20.

In embodiments of the present disclosure, an anti-counterfeiting circuit 11 is configured to implement communication between the battery rod 20 and the atomizer 10, and the anti-counterfeiting circuit 11 is integrated on an anti-counterfeiting chip ASIC, thereby replacing a solution of implementing communication through a circuit board in the related art. The anti-counterfeiting chip ASIC may be manufacture in a form of a wafer, in this way, the anti-counterfeiting chip ASIC has a feature of a small volume and is easy to mount.

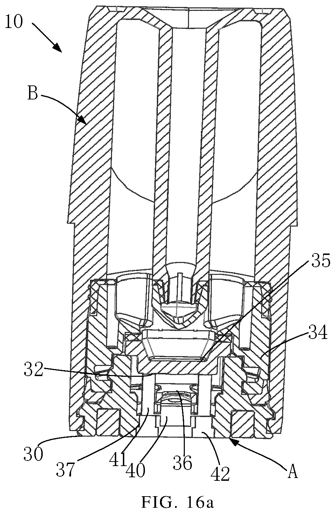

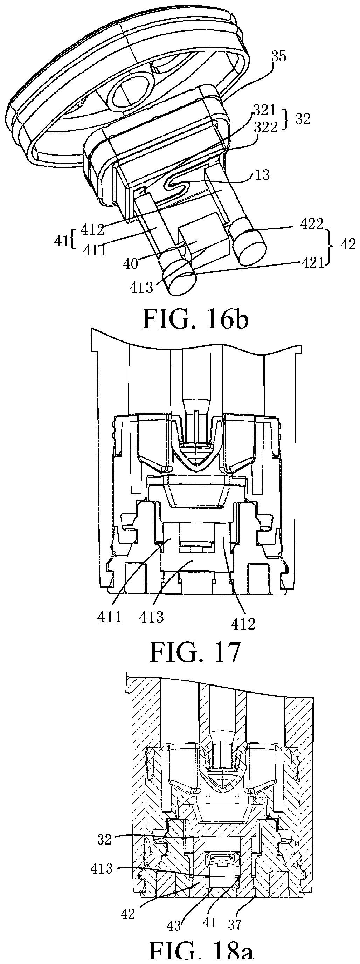

Referring to FIG. 16, FIG. 16a is a schematic structural diagram of a first embodiment of the atomizer 10 according to the present disclosure. The atomizer 10 may be applied to fields such as electronic atomizing devices and medical atomization, and has a feature of a specific structure, which facilitates an automatic mounting method. Therefore, a mounting process may be simplified, the assembly efficiency may be improved, labor costs during assembly may be reduced, and some human errors in an assembly process may be avoided.

In some embodiments, the atomizer 10 may include an atomization unit A and a liquid storage unit B sleeved on the atomization unit A. The liquid storage unit B is in communication with the atomization unit A in a liquid guiding manner. The atomization unit A may be configured to heat and atomize a liquid medium stored in the liquid storage unit B, and the liquid storage unit B is configured to store the liquid medium and export atomized gas.

In some embodiments, the atomization unit A may include an atomization bottom base 30, an atomization assembly 35, and an atomization top base 34. In some embodiments, the atomization bottom base 30 may be in a shape of an ellipse and may be electrically connected to the battery rod 20, and the atomization assembly 35 is disposed on the atomization bottom base 30. The atomization top base 34 is sleeved or clamped on the atomization bottom base 30 from top to bottom and covers the atomization assembly 35. The atomization top base 34 may include an integrated sleeve, and the sleeve may be sleeved on the atomization bottom base 30, to accommodate the atomization assembly 35 and form an atomization cavity 36. Structures of the atomization bottom base 30, the atomization assembly 35, and the atomization top base 34 are not limited, and may be designed according to different types of the atomizer 10.

The atomization assembly 35 further includes a heating element 13, and the atomizer 10 further includes an anti-counterfeiting component 40. The atomization assembly 35 includes an electrode contact 32, the electrode contact 32 is positive and negative electrodes of the heating element 13, and the anti-counterfeiting component 40 includes an electrode connection portion 41. The electrode connection portion 41 of the anti-counterfeiting component 40 is electrically connected to the electrode contact 32, to connect the heating element 13 to the anti-counterfeiting component 40 in parallel. The anti-counterfeiting component 40 includes an anti-counterfeiting unit 413, and an anti-counterfeiting chip ASIC is packaged in the anti-counterfeiting unit 413. The anti-counterfeiting chip ASIC is the anti-counterfeiting chip ASIC in the atomizer 10 shown in FIG. 1, and as shown in FIG. 1, the anti-counterfeiting chip ASIC may be a wafer, and an anti-counterfeiting circuit 11 is integrated on the wafer. The anti-counterfeiting circuit 11 integrated on the anti-counterfeiting chip ASIC includes a processing unit CPU and a signal source 12 connected to the processing unit CPU. The processing unit CPU controls the signal source 12 to work in a first state or a second state, to communicate with the battery rod 20, and further determine whether the battery rod 20 matches the atomizer 10. Detailed principles are not described herein again.

As described above, the anti-counterfeiting chip ASIC needs to be connected to the heating element 13 in parallel to implement communication between the atomizer 10 and the battery rod 20. In this embodiment, as shown in FIG. 16b, the heating element 13 is located on the atomization assembly 35. The anti-counterfeiting chip ASIC is electrically connected to the electrode connection portion 41, and is further electrically connected to the electrode contact 32 of the atomization assembly 35. Therefore, the anti-counterfeiting chip ASIC may be connected to the heating element 13 in parallel, and the atomizer 10 may communicate with the battery rod 20 through the anti-counterfeiting chip ASIC and further determine whether the battery rod 20 matches the atomizer 10. The atomizer 10 further includes a conductive component 42, a first end of the conductive component 42 is electrically connected to the electrode contact 32 through the electrode connection portion 41, and a second end is exposed from the bottom portion of the atomizer 10 to serve as an electrode (namely, the first connection end m1 and the second connection end m2) of the atomizer 10. When the atomizer 10 is connected to the battery rod 20, an electrode (namely, the first connection end n1 and the second connection end n2) of the battery rod 20 is correspondingly connected to the electrode (namely, the first connection end m1 and the second connection end m2) of the atomizer 10, in this way, the anti-counterfeiting component 40 may communicate with the battery rod 20 and further determine whether the battery rod 20 matches the atomizer 10. The second end of the conductive component 42 exposed from the bottom portion of the atomizer 10 is the first connection end m1 and the second connection end m2 of the atomizer 10 shown in FIG. 1.

In an embodiment, the electrode contact 32 includes a first electrode contact 321 and a second electrode contact 322. The electrode connection portion 41 includes a first electrode connection portion 411 and a second electrode connection portion 412. The conductive component 42 includes a first conductive component 421 and a second conductive component 422. A first end of the first electrode connection portion 411 abuts against the first electrode contact 321, and a second end thereof is connected to the anti-counterfeiting unit 413. A first end of the second electrode connection portion 412 abuts against the second electrode contact 322, and a second end thereof is connected to the anti-counterfeiting unit 413. A first end of the first conductive component 421 abuts against the second end of the first electrode connection portion 411, and a second end of the first conductive component 421 is inserted into a through hole 37 of the atomization bottom base 30 of the atomizer 10 and exposed, to serve as a first electrode (namely, the first connection end m1) of the atomizer 10. A first end of the second conductive component 422 abuts against the second end of the second electrode connection portion 412, and a second end of the second conductive component 422 is inserted into the through hole 37 of the atomization bottom base 30 of the atomizer 10 and exposed, to serve as a second electrode (namely, the second connection end m2) of the atomizer 10.

As shown in FIG. 16b, in the anti-counterfeiting component 40, the anti-counterfeiting unit 413 is located between the first conductive component 421 and the second conductive component 422, and the second end of the first electrode connection portion 411 and the second end of the second electrode connection portion 412 are disposed on the two opposite sides of the anti-counterfeiting unit 413 respectively. In this embodiment, the orthographic projection of the anti-counterfeiting unit 413 on the atomization bottom base 30 completely does not overlap with the orthographic projections of the second end of the first electrode connection portion 411 and the second end of the second electrode connection portion 412 on the atomization bottom base 30. In an embodiment, positive and negative pins are connected to the anti-counterfeiting chip ASIC in the anti-counterfeiting unit 413, and the second end of the first electrode connection portion 411 and the second end of the second electrode connection portion 412 are connected to the positive and negative pins respectively. In the foregoing manner, the anti-counterfeiting component 40 is connected to the heating element 13 in parallel. Further, when the battery rod 20 is connected to the atomizer 10, the battery rod 20 may send the first communication signal to the atomizer 10, and the atomizer 10 may feed back the second communication signal to the battery rod 20 to implement communication, thereby determining whether the battery rod 20 matches the atomizer 10.

Referring to FIG. 17, FIG. 17 is a schematic structural diagram of a second embodiment of the atomizer 10 according to the present disclosure. Compared with the first embodiment shown in FIG. 16a and FIG. 16b, a difference lies in that: in this embodiment, the second end of the first electrode connection portion 411 and the second end of the second electrode connection portion 412 are both disposed on the surface of the anti-counterfeiting unit 413 facing the atomization assembly 35, namely, the first electrode connection portion 411 and the second electrode connection portion 412 are located between the atomization assembly 35 and the anti-counterfeiting unit 413. The orthographic projection of the anti-counterfeiting unit 413 on the atomization bottom base 30 partially overlaps with the orthographic projections of the first electrode connection portion 411 and the second electrode connection portion 412 on the atomization bottom base 30.

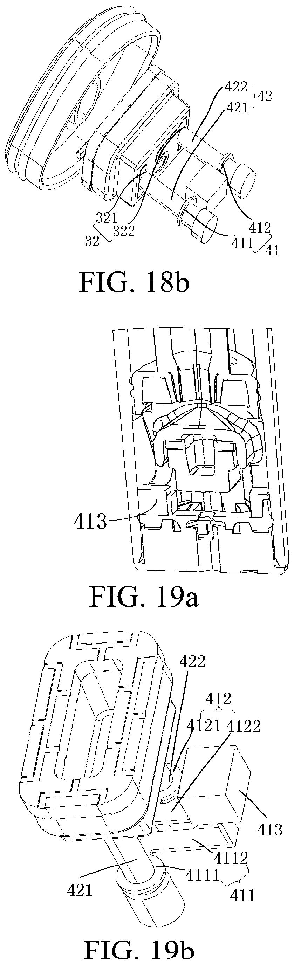

Referring to FIG. 18a and FIG. 18b, FIG. 18a and FIG. 18b are schematic structural diagrams of a third embodiment of the atomizer 10 according to the present disclosure. In this embodiment, the first end of the conductive component 42 abuts against the electrode contact 32, and the second end is exposed from the bottom portion of the atomizer 10 to serve as an electrode (namely, the first connection end m1 and the second connection end m2) of the atomizer 10. The electrode connection portion 41 is connected to a part located between the first end and the second end of the conductive component 42, and the electrode connection portion 41 is electrically connected to the electrode contact 32 through the conductive component 42. When the atomizer 10 is connected to the battery rod 20, an electrode of the battery rod 20 is correspondingly connected to the electrode of the atomizer 10, in this way, the anti-counterfeiting component 40 may communicate with the battery rod 20 and further determine whether the battery rod 20 matches the atomizer 10.

The first end of the first conductive component 421 abuts against the first electrode contact 321, and the second end of the first conductive component is inserted into the through hole 37 of the atomization bottom base 30 of the atomizer 10 and exposed, to serve as the first electrode (namely, the first connection end m1) of the atomizer 10. The first end of the second conductive component 422 abuts against the second electrode contact 322, and the second end of the second conductive component is inserted into the through hole 37 of the atomization bottom base 30 of the atomizer 10 and exposed, to serve as the second electrode (namely, the second connection end m2) of the atomizer 10. The first electrode connection portion 411 is connected to a part between the first end and the second end of the first conductive component 421, and the second electrode connection portion 412 is connected to a part between the first end and the second end of the second conductive component 422.

In the foregoing manner, the anti-counterfeiting component 40 is connected to the heating element 13 in parallel. Further, when the battery rod 20 is connected to the atomizer 10, the battery rod 20 may send the first communication signal to the atomizer 10, and the atomizer 10 may feed back the second communication signal to the battery rod 20 to implement communication, thereby determining whether the battery rod 20 matches the atomizer 10.

In this embodiment, the first electrode connection portion 411 and the second electrode connection portion 412 are disposed on the two opposite sides of the anti-counterfeiting unit 413 respectively, the first electrode connection portion 411 and the second electrode connection portion 412 are annular, and the first electrode connection portion 411 and the second electrode connection portion 412 are sleeved on the first conductive component 421 and the second conductive component 422 respectively, in this way, the anti-counterfeiting unit 413 is disposed between the first electrode connection portion 411 and the second electrode connection portion 412. In this embodiment, the orthographic projection of the anti-counterfeiting unit 413 on the atomization bottom base 30 completely does not overlap with the orthographic projections of the second end of the first electrode connection portion 411 and the second end of the second electrode connection portion 412 on the atomization bottom base 30.

Referring to FIG. 19a and FIG. 19b, FIG. 19a and FIG. 19b are schematic structural diagrams of a fourth embodiment of the atomizer 10 according to the present disclosure. Compared with the third embodiment shown in FIG. 18a and FIG. 18b, a difference lies in that: in this embodiment, the first electrode connection portion 411 includes a first sleeve portion 4111 and a first extending portion 4112, the second electrode connection portion 412 includes a second sleeve portion 4121 and a second extending portion 4122, and the first sleeve portion 4111 and the second sleeve portion 4121 are sleeved on the first conductive component 421 and the second conductive component 422 respectively. In this embodiment, the anti-counterfeiting unit 413 is disposed on one side of one line in which the first sleeve portion 4111 and the second sleeve portion 4121 are located and is connected to the first sleeve portion 4111 and the second sleeve portion 4121 respectively through the first extending portion 4112 and the second extending portion 4122. As shown in FIG. 18a, the anti-counterfeiting unit 413 is disposed at a side position of the atomization bottom base 30.

In the first embodiment to the fourth embodiment described above, the conductive component is an electrode column, which may be made of any conductive material, may be in a shape of a column, and the cross section thereof may be in a shape of a circle, a rectangle, or a triangle.

In an embodiment, the anti-counterfeiting unit 413 may be disposed on the side of the atomization bottom base 30 of the atomizer 10 close to the atomization assembly 35, and may be spaced apart from the atomization bottom base 30 of the atomizer 10. That is, the anti-counterfeiting unit 413 is not in contact with the atomization bottom base 30 of the atomizer 10. In another embodiment, the anti-counterfeiting unit 413 may be disposed on the surface of the side of the atomization bottom base 30 of the atomizer 10 close to the atomization assembly 35. That is, the anti-counterfeiting unit 413 is in contact with the atomization bottom base 30 of the atomizer 10. In another embodiment, the anti-counterfeiting unit 413 may alternatively be disposed in a groove 43 or a through hole 43 of the atomization bottom base 30 of the atomizer 10. This example is shown in FIG. 18a. In the embodiment shown in FIG. 18a, the atomization bottom base 30 of the atomizer 10 includes a groove 43, and the anti-counterfeiting unit 413 is disposed in the groove 43. The groove 43 may be a groove formed by concaving from the side of the atomization bottom base 30 close to the atomization assembly 35, or may be a groove formed by concaving from the side of the atomization bottom base 30 away from the atomization assembly 35. In another embodiment, the groove 43 may be a through hole 43, and the anti-counterfeiting unit 413 is disposed in the through hole 43. In an embodiment, when the groove 43 is a through hole 43, a protection member (not shown in the figure) may be further disposed on the side of the anti-counterfeiting unit 413 in the through hole 43 away from the atomization assembly 35, and the protection member blocks the anti-counterfeiting unit 413 in the atomization bottom base 30 to prevent the anti-counterfeiting unit 413 from being exposed or worn out. In another embodiment, the protection member is not disposed, and a plastic packaging glue is disposed on the side of the anti-counterfeiting unit 413 in the through hole 43 away from the atomization assembly 35. In another embodiment, no matter in the groove 43 or the through hole 43, a protection member may be disposed on the side of the anti-counterfeiting unit 413 close to the atomization assembly 35, the protection member and the anti-counterfeiting unit 413 are stacked, and the protection member may fix the anti-counterfeiting unit 413 in the groove 43 or the through hole 43, to prevent movement of the anti-counterfeiting unit 413.

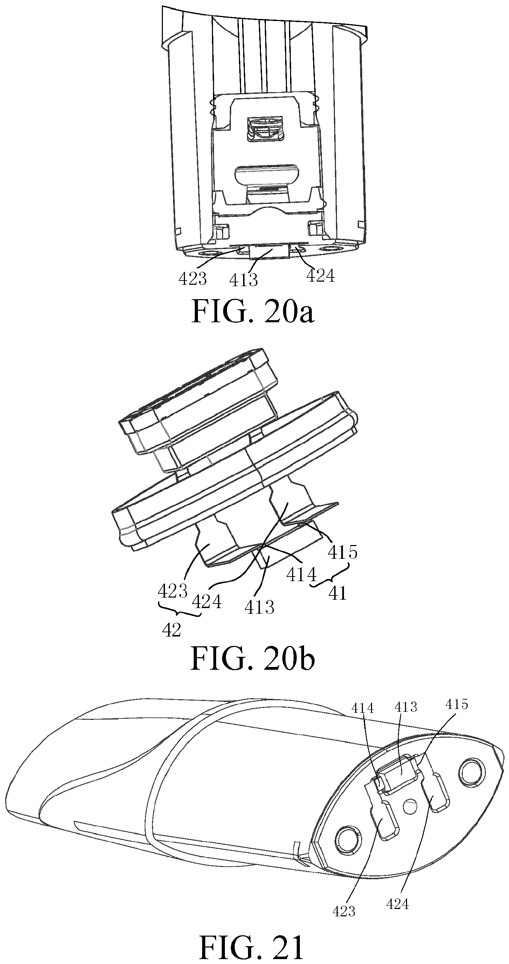

Referring to FIG. 20a and FIG. 20b, FIG. 20a and FIG. 20b are schematic structural diagrams of a fifth embodiment of the atomizer 10 according to the present disclosure. In this embodiment, the conductive component 42 includes a first elastic sheet 423 and a second elastic sheet 424. The electrode connection portion 41 includes a first pin 414 and a second pin 415. The first pin 414 and the second pin 415 are located on the surface of the anti-counterfeiting unit 413.

The first elastic sheet 423 and the second elastic sheet 424 pass through the atomization bottom base 30 of the atomizer 10 and are bent. A first end of the first elastic sheet 423 abuts against the first electrode contact 321, a second end of the first elastic sheet 423 is disposed on the surface of the atomization bottom base 30 of the atomizer 10 away from the atomization assembly 35. A first end of the second elastic sheet 424 abuts against the second electrode contact 322, and a second end of the second elastic sheet 424 is disposed on the surface of the atomization bottom base 30 of the atomizer 10 away from the atomization assembly 35. The anti-counterfeiting unit 413 is electrically connected to the first elastic sheet 423 and the second elastic sheet 424 respectively through the first pin 414 and the second pin 415.

As shown in FIG. 20a, in this embodiment, the first elastic sheet 423 is exposed from the bottom portion of the atomization bottom base 30 to serve as the first electrode (namely, the first connection end m1) of the atomizer 10, and the second elastic sheet 412 is exposed from the bottom portion of the atomization bottom base 30 to serve as the second electrode (namely, the second connection end m2) of the atomizer 10. In this embodiment, the anti-counterfeiting unit 413 is disposed on the surface of the side of the atomization bottom base 30 of the atomizer 10 away from the atomization assembly 35, and is exposed from the bottom portion of the atomization bottom base 30 of the atomizer 10. The first pin 414 is at least partially disposed between the anti-counterfeiting unit 413 and the first elastic sheet 423, and the second pin 415 is at least partially disposed between the anti-counterfeiting unit 413 and the second elastic sheet 412. The orthographic projections of the first pin 414, the first elastic sheet 423, and the anti-counterfeiting unit 413 on the atomization bottom base 30 partially overlap with each other, and the orthographic projections of the second pin 415, the second elastic sheet 424, and the anti-counterfeiting unit 413 on the atomization bottom base 30 completely overlap with each other. The first pin 414 is connected to the first electrode contact 321 of the atomization assembly 35 through the first elastic sheet 423, and the second pin 415 is connected to the second electrode contact 322 of the atomization assembly 35 through the second elastic sheet 424, in this way, the anti-counterfeiting unit 413 is connected to the heating element 13 in the atomization assembly 35 in parallel. When the atomizer 10 is connected to the battery rod 20, communication between the atomizer 10 and the battery rod 20 is implemented, and whether the atomizer 10 matches the battery rod 20 is further determined.

As shown in FIG. 21, FIG. 21 is a schematic structural diagram of a sixth embodiment of the atomizer 10 according to the present disclosure. Compared with the fifth embodiment shown in FIG. 20a and FIG. 20b, a difference lies in that: in this embodiment, the anti-counterfeiting unit 413 is disposed on the side of the atomization bottom base 30 of the atomizer 10 away from the atomization assembly 35, the first pin 414 is at least partially disposed between the atomization bottom base 30 of the atomizer 10 and the first elastic sheet 423, and the second pin 415 is at least partially disposed between the atomization bottom base 30 of the atomizer 10 and the second elastic sheet 424. In this embodiment, the orthographic projections of the first pin 414, the first elastic sheet 423, and the anti-counterfeiting unit 413 on the atomization bottom base 30 completely do not overlap with each other, and the orthographic projections of the second pin 415, the second elastic sheet 424, and the anti-counterfeiting unit 413 on the atomization bottom base 30 completely do not overlap with each other.

In another embodiment, the orthographic projections of the first pin 414 and the first elastic sheet 423 on the atomization bottom base 30 may at least partially overlap with each other, and the orthographic projections of the second pin 415 and the second elastic sheet 424 on the atomization bottom base 30 may at least partially overlap with each other. Details are not limited, provided that the first pin 414 and the second pin 415 of the anti-counterfeiting unit 413 may be respectively connected to the first elastic sheet 423 and the second elastic sheet 424.

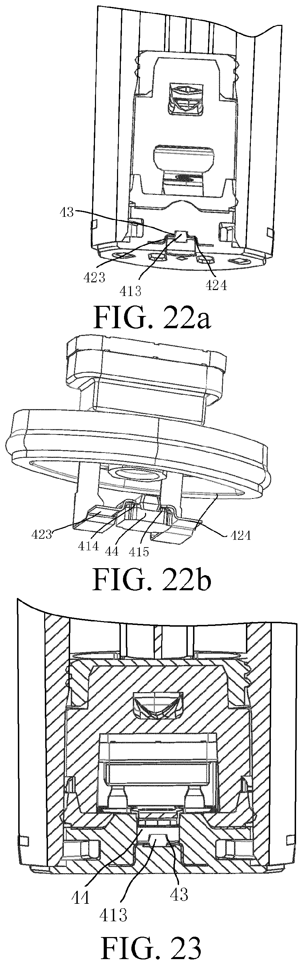

As shown in FIG. 22, FIG. 22 is a schematic structural diagram of a seventh embodiment of the atomizer 10 according to the present disclosure. Different from the fifth embodiment shown in FIG. 20a and FIG. 20b, a difference lies in that: in this embodiment, the side of the atomization bottom base 30 of the atomizer 10 away from the atomization assembly 35 includes a groove 43, the anti-counterfeiting unit 413 is disposed in the groove 43, and the first elastic sheet 423 and the second elastic sheet 424 further extend into the groove 43 and are electrically connected to the first pin 414 and the second pin 415 respectively.

In this embodiment, the side of the atomization bottom base 30 of the atomizer 10 away from the atomization assembly 35 includes a groove 43, and the anti-counterfeiting unit 413 is disposed in the groove 43. To protect the groove 43, a protection member 44 is further disposed in the groove 43, and the protection member 44 covers the anti-counterfeiting unit 413, to prevent the anti-counterfeiting unit 413 from being exposed from the bottom portion of the atomization bottom base 30. The protection member 44 may not be disposed. In order to protect the anti-counterfeiting unit 413, sealing may be performed at a position corresponding to the anti-counterfeiting unit 413 of the bottom portion of the atomization bottom base 30.

As shown in FIG. 23, FIG. 23 is a schematic structural diagram of an eighth embodiment of the atomizer 10 according to the present disclosure. Compared with the seventh embodiment shown in FIG. 22a and FIG. 22b, a difference lies in that: in this embodiment, the anti-counterfeiting unit 413 is disposed in a groove 43 in the side of the atomization bottom base 30 of the atomizer 10 close to the atomization assembly 35, and the first elastic sheet 423 and the second elastic sheet 424 further extend into the groove 43 and are electrically connected to the first pin 414 and the second pin 415 respectively.

In this embodiment, the protection member 44 is disposed on the side of the atomization bottom base 30 of the atomizer 10 close to the atomization assembly 35 and covers the anti-counterfeiting unit 413. A position of the protection member 44 corresponding to the anti-counterfeiting unit 413 includes a groove 43 for accommodating the anti-counterfeiting unit 413, in this way, the anti-counterfeiting unit 413 may be fixed in the groove 43 of the atomization bottom base 30.

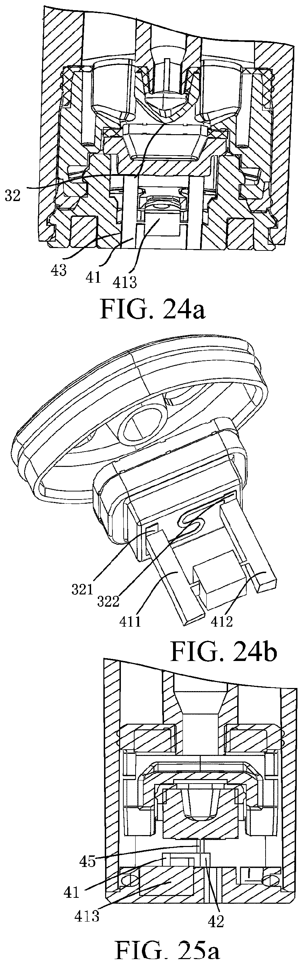

As shown in FIG. 24a and FIG. 24b, FIG. 24a and FIG. 24b are schematic structural diagrams of a ninth embodiment of the atomizer 10 according to the present disclosure. In this embodiment, the anti-counterfeiting unit 413 is directly connected to the electrode contact 32 of the atomization assembly 35 through the electrode connection portion 41. One end of the electrode connection portion 41 is exposed from the bottom portion of the atomizer 10 to serve as an electrode (namely, the first connection end m1 and the second connection end m2) of the atomizer 10. When the atomizer 10 is connected to the battery rod 20, an electrode of the battery rod 20 is correspondingly connected to the electrode of the atomizer 10, in this way, the anti-counterfeiting component may communicate with the battery rod 20 and further determine whether the battery rod 20 matches the atomizer 10.

The electrode contact 32 includes a first electrode contact 321 and a second electrode contact 322. The electrode connection portion 41 includes a first electrode connection portion 411 and a second electrode connection portion 412. A first end of the first electrode connection portion 411 abuts against the first electrode contact 321, and a second end of the first electrode connection portion is inserted into the through hole 43 of the atomization bottom base 30 of the atomizer 10 and exposed, to serve as the first electrode (namely, the first connection end m1) of the atomizer 10. A first end of the second electrode connection portion 412 abuts against the second electrode contact 322, and a second end of the second electrode connection portion is inserted into the through hole 43 of the atomization bottom base 30 of the atomizer 10 and exposed, to serve as the second electrode (namely, the second connection end m2) of the atomizer 10.

In this embodiment, a part between the first end and the second end of the first electrode connection portion 411 is electrically connected to the anti-counterfeiting unit 413, and a part between the first end and the second end of the second electrode connection portion 412 is electrically connected to the anti-counterfeiting unit 413.

In the foregoing embodiments, the anti-counterfeiting unit 413 may include a wafer and a package body wrapping the wafer. A conductive line is disposed on the wafer, the package body packages the wafer to form the anti-counterfeiting unit 413, and the package body may further package the conductive line on the wafer, to form positive and negative pins electrically connected to the electrode connection portion 41. Further, the package body may further package the electrode connection portion 41, in this way, the electrode connection portion 41 and the anti-counterfeiting unit 413, namely, the anti-counterfeiting component 40 form an independent element. Certainly, it may be understood that, the electrode connection portion 41 may serve as an independent element and exist independent of the anti-counterfeiting unit 413. That is, the anti-counterfeiting component 40 includes two parts: the anti-counterfeiting unit 413 and the electrode connection portion 41 spaced apart from each other. In another embodiment, the anti-counterfeiting unit 413 may directly be a wafer, and the wafer is bound to the conductive component 42 through a conductive line such as a golden line or a copper line by a binding machine, to be further connected to an electrode contact of the atomization assembly.

In the foregoing embodiments, the conductive component, the electrode connection portion, and the electrode contact may be connected to each other through a riveting, crimping, welding, or bonding process, etc.

In the atomizer 10 provided in embodiments of the present disclosure, the anti-counterfeiting component 40 may be located at any position in a cavity formed by the atomization bottom base 30 and the atomization assembly, or may be located in the through hole or the groove of the atomization bottom base 30. In embodiments of the present disclosure, the anti-counterfeiting component 40 is configured to replace the circuit board that may implement communication in the related art. On one hand, the structure of the anti-counterfeiting component 40 is simple, in this way, a small volume may be implemented. On the other hand, costs may be reduced.

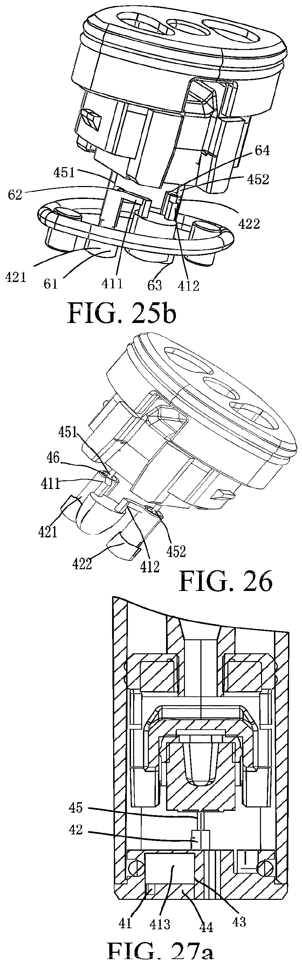

As shown in FIG. 25a and FIG. 25b, FIG. 25a and FIG. 25b are schematic structural diagrams of a tenth embodiment of the atomizer 10 according to the present disclosure. Compared with the first embodiment shown in FIG. 16a and FIG. 16b, a difference lies in that: in this embodiment, the atomization assembly 35 includes an electrode lead 45, and the anti-counterfeiting component 40 includes an electrode connection portion 41. The electrode connection portion 41 is connected to the electrode lead 45, to connect the atomization assembly 35 with the anti-counterfeiting component 40 in parallel. Therefore, when the atomizer 10 is connected to the battery rod 20, the anti-counterfeiting component 40 may communicate with the battery rod 20 and further determine whether the battery rod 20 matches the atomizer 10.

In this embodiment, the atomizer 10 further includes a conductive component 42. The electrode connection portion 41 and the electrode lead 45 are connected through the conductive component 42, and one end of the conductive component 42 is exposed from the bottom portion of the atomizer 10 to serve as an electrode (namely, the first connection end m1 and the second connection end m2) of the atomizer 10. When the atomizer 10 is connected to the battery rod 20, an electrode of the battery rod 20 is correspondingly connected to the electrode of the atomizer 10, in this way, the anti-counterfeiting component may communicate with the battery rod 20 and further determine whether the battery rod 20 matches the atomizer 10.

In an embodiment, the electrode connection portion 41 and the electrode lead 45 are disposed on the conductive component 42, to connect the anti-counterfeiting component 40 with the heating element 13 in the atomization assembly 35 in parallel.

The conductive component 42 includes a first conductive component 421 and a second conductive component 422. The electrode lead 45 includes a first electrode lead 451 and a second electrode lead 452. The electrode connection portion 41 includes a first electrode connection portion 411 and a second electrode connection portion 412.

The first conductive component 421 and the second conductive component 422 are electrode columns. The first electrode connection portion 411 and the first electrode lead 451 are connected through the first conductive component 421. The first electrode connection portion 411 and the first electrode lead 451 may be welded, crimped, or riveted on the first conductive component 421. One end of the first conductive component 421 is inserted into a through hole (not shown in the figure) of the atomization bottom base 30 of the atomizer 10 and exposed, to serve as the first electrode (namely, the first connection end m1) of the atomizer 10. The second electrode connection portion 412 and the second electrode lead 452 are connected through the second conductive component 422. The second electrode connection portion 412 and the second electrode lead 452 may be welded, crimped, or riveted on the second conductive component 422. One end of the second conductive component 422 is inserted into the through hole of the atomization bottom base 30 of the atomizer 10 and exposed, to serve as the second electrode (namely, the second connection end m2) of the atomizer 10.

When the atomizer 10 is connected to the battery rod 20, an electrode of the battery rod 20 is correspondingly connected to the electrode of the atomizer 10, in this way, the anti-counterfeiting component may communicate with the battery rod 20 and further determine whether the battery rod 20 matches the atomizer 10.

The first conductive component 421 includes a first columnar body 61 and a second columnar body 62 protruding from the surface of the first columnar body 61, and the second conductive component 422 includes a third columnar body 63 and a fourth columnar body 64 protruding from the surface of the third columnar body 63. The first columnar body 61 and the third columnar body 63 are embedded in the through hole of the atomization bottom base 30 of the atomizer 10 and exposed. The first electrode connection portion 451 is inserted from the side surface of the first columnar body 61, extends out of the top surface, and is attached to the surface of the second columnar body 62. The second electrode connection portion 452 is inserted from the side surface of the third columnar body 63, extends out of the top surface, and is attached to the surface of the fourth columnar body 64.

In this embodiment, the anti-counterfeiting unit 413 may be disposed on the side of the atomization bottom base 30 of the atomizer 10 close to the atomization assembly 35, and may be spaced apart from the atomization bottom base 30 of the atomizer 10. Alternatively, the anti-counterfeiting unit 413 is disposed on the surface of the side of the atomization bottom base 30 of the atomizer 10 close to or away from the atomization assembly 35. Alternatively, the anti-counterfeiting unit 413 is disposed in the groove or the through hole of the atomization bottom base 35 of the atomizer 10, which is not specifically limited.

As shown in FIG. 26, FIG. 26 is a schematic structural diagram of an eleventh embodiment of the atomizer 10 according to the present disclosure. Compared with the tenth embodiment shown in FIG. 25a and FIG. 25b, a difference lies in that: in this embodiment, the first conductive component 421 and the second conductive component 422 are electrode columns, and one end of each of the two conductive components away from the atomization bottom base 30 includes a blind hole 46. The first electrode connection portion 411 and the first electrode lead 451 are inserted into the blind hole 46 of the first conductive component 421 to be connected to the first conductive component 421, and the second electrode connection portion 412 and the second electrode lead 452 are inserted into the blind hole 46 of the second conductive component 422 to be connected to the second conductive component 421.

In the ninth embodiment and the tenth embodiment, the electrode connection portion 41 is led out from the side of the anti-counterfeiting unit 413 close to the atomization assembly 35. That is, the first electrode connection portion 411 and the second electrode connection portion 412 are led out from the surface of the anti-counterfeiting unit 413 close to the atomization assembly 35.

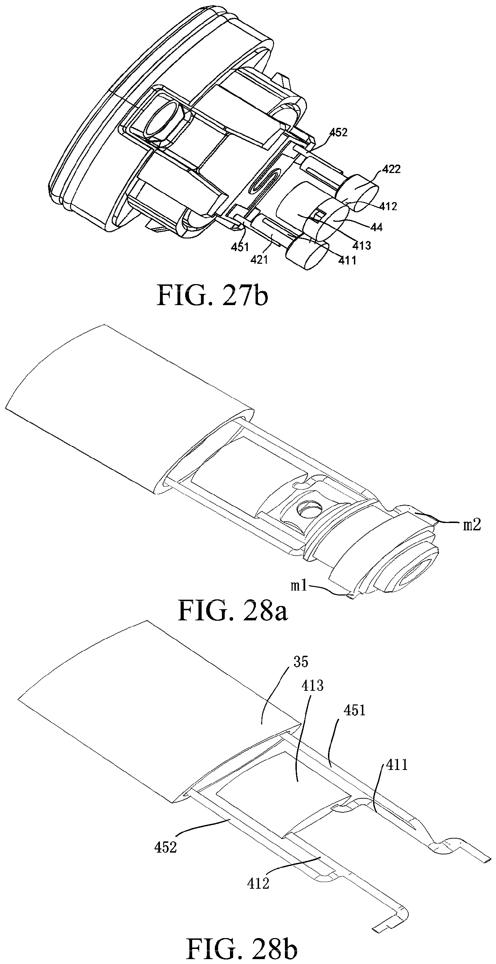

As shown in FIG. 27a and FIG. 27b, FIG. 27a and FIG. 27b are schematic structural diagrams of a twelfth embodiment of the atomizer 10 according to the present disclosure. Compared with the eleventh embodiment shown in FIG. 26, a difference lies in that: in this embodiment, the electrode connection portion 41 is led out from the surface of the anti-counterfeiting unit 413 away from the atomization assembly 35. That is, the first electrode connection portion 411 and the second electrode connection portion 412 are led out from the surface of the anti-counterfeiting unit 413 away from the atomization assembly 35.

Further, this embodiment further includes a protection member 44. The protection member 44 is stacked with the anti-counterfeiting unit 413 and is located on the side of the anti-counterfeiting unit 413 away from the atomization assembly 35. In this embodiment, an opening of the groove 43 of the atomization bottom base 30 is located at the surface of the atomization bottom base 30 away from the atomization assembly 35. The protection member 44 and the anti-counterfeiting unit 413 are disposed in the groove 43, and the first electrode connection portion 411 and the second electrode connection portion 412 extend into the protection member 44 and further extend to positions of the first conductive component 421 and the second conductive component 422. In this embodiment, the first electrode lead 451 and the first electrode connection portion 411 are connected to the first conductive component 421 in a welding/crimping/riveting manner, and the second electrode connection portion 412 and the second electrode lead 452 are connected to the second conductive component 422 in a welding/crimping/riveting manner, to connect the anti-counterfeiting component 413 with the heating element 13 in the atomization assembly 35 in parallel.

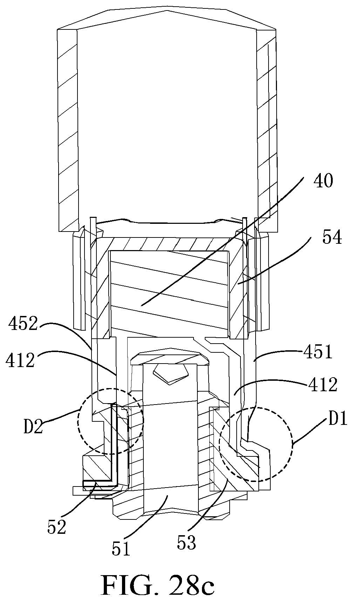

As shown in FIG. 28a, FIG. 28b, and FIG. 28c, FIG. 28a, FIG. 28b, and FIG. 28c are schematic structural diagrams of a thirteenth embodiment of the atomizer 10 according to the present disclosure. In this embodiment, the electrode lead 45 includes a first electrode lead 451 and a second electrode lead 452. The electrode connection portion 41 includes a first electrode connection portion 411 and a second electrode connection portion 412. The first electrode connection portion 411 is connected to the first electrode lead 451, and extends to the bottom portion of the atomizer 10 to serve as the first electrode (namely, the first connection end m1) of the atomizer 10. The second electrode connection portion 412 is connected to the second electrode lead 452, and extends to the bottom portion of the atomizer 10 to serve as the second electrode (namely, the second connection end m2) of the atomizer 10. When the atomizer 10 is connected to the battery rod 20, a positive electrode and a negative electrode of the battery rod 20 are respectively connected to the first electrode and the second electrode of the atomizer 10, in this way, the anti-counterfeiting component 40 may communicate with the battery rod 20 and further determine whether the battery rod 20 matches the atomizer 10.

As shown in FIG. 28c, the atomizer 10 further includes a metal ejector pin 51, an insulating member 52, and a metal bottom base 53. The insulating member 52 is sleeved on the outer surface of the metal ejector pin 51, and the metal bottom base 53 is sleeved on the outer surface of the insulating member 52. The first electrode connection portion 411 and/or the first electrode lead 451 extends to a position between the insulating member 52 and the metal bottom base 53 and is exposed from the bottom portion of the metal bottom base 53, and is connected to the metal bottom base 53 to serve as the second electrode (namely, the second connection end m2).The second electrode connection portion 412 and/or the second electrode lead 452 extends to a position between the insulating member 52 and the metal ejector pin 51 and is exposed at the bottom portion of the metal bottom base 53, and is connected to the metal ejector pin 51 to serve as the first electrode (namely, the first connection end m1).

In this embodiment, the first electrode connection portion 411 and the first electrode lead 451 are connected at D1, and the second electrode connection portion 412 and the second electrode lead 452 are connected at D2.

As shown in FIG. 28b, the atomization assembly 35 is located on the side of the metal bottom base 53 away from the first electrode (the first connection end m1) and the second electrode (the second connection end m2), and the anti-counterfeiting component 413 is located between the atomization assembly 35 and the metal bottom base 53.

Further, as shown in FIG. 28c, the atomizer 10 further includes a positioning member 54. The positioning member 54 is sleeved on the outer side of the anti-counterfeiting component 413 and abuts against the atomization assembly 35, to fix the anti-counterfeiting component 40 between the atomization assembly 35 and the metal bottom base 53.

In the atomizer 10 provided in embodiments of the present disclosure, the anti-counterfeiting component 40 may be located at any position in a cavity formed by the atomization bottom base 30 and the atomization assembly 35, or may be located in the through hole or the groove of the atomization bottom base 30. In embodiments of the present disclosure, the anti-counterfeiting component is configured to replace the circuit board that may implement communication in the related art. On one hand, the structure of the anti-counterfeiting chip is simple, in this way, a small volume may be implemented. On the other hand, costs may be reduced.

The foregoing descriptions are merely embodiments of the present disclosure, and the patent scope of the present disclosure is not limited thereto. All equivalent structure or process changes made according to the content of this specification and the accompanying drawings in the present disclosure or by directly or indirectly applying the present disclosure in other related technical fields shall fall within the protection scope of the present disclosure.

## Claims

1. An atomizer, comprising:
a first connection end and a second connection end, configured to be connected to a battery rod when the atomizer is inserted into the battery rod; and
an anti-counterfeiting circuit, connected to the first connection end and the second connection end, configured to receive a first communication signal from the battery rod through the first connection end, configured to send a second communication signal to the battery rod through the first connection end, and configured to implement communication between the battery rod and the atomizer;
wherein the first communication signal comprises a logic high level served as a first level signal and a logic low level served as a second level signal, the second communication signal comprises a logic high level served as a third level signal and a logic low level served as a fourth level signal, and the second level signal and the fourth level signal are greater than the power supply voltage of the anti-counterfeiting circuit.

2. The atomizer according to claim 1, wherein the first level signal is greater than or equal to the third level signal, the fourth level signal is greater than or equal to the second level signal, and the third level signal is greater than the second level signal.

3. The atomizer according to claim 1, wherein the first level signal is greater than or equal to the third level signal, the fourth level signal is less than the second level signal, and the third level signal is greater than or equal to the second level signal.

4. The atomizer according to claim 1, wherein the second level signal is greater than the third level signal.

5. The atomizer according to claim 1, wherein the anti-counterfeiting circuit comprises a signal source, the signal source is connected to the first connection end and the second connection end, and the signal source is configured to send the second communication signal to the battery rod.

6. The atomizer according to claim 5, wherein the anti-counterfeiting circuit further comprises a processing unit comprising a first control interface configured to output a first control signal; and
the signal source is connected to the first control interface, and the first control signal is used to drive the signal source to work.

7. The atomizer according to claim 6, further comprising:
a heating element, connected to the signal source in parallel, wherein the heating element and signal source are disposed in parallel between the first connection end and the second connection end;
when the signal source works in a first state, a voltage on the first connection end is maintained at the third level signal; and
when the signal source works in a second state, the voltage on the first connection end is maintained at the fourth level signal.

8. The atomizer according to claim 7, wherein
the processing unit comprises a second control interface configured to output a second control signal; and
the atomizer further comprises:
a direction switching circuit, connected to the second control interface, connected to the heating element in parallel, and configured to insert the atomizer into a battery rod under the driving of the second control signal.

9. The atomizer according to claim 1, wherein the anti-counterfeiting circuit is an independent element.

10. A battery rod, comprising:
a first connection end and a second connection end, configured to be connected to an atomizer inserted into the battery rod; and
a control unit, connected to the first connection end, configured to send a first communication signal to the atomizer inserted into the battery rod through the first connection end, configured to receive a second communication signal from the atomizer through the first connection end, and configured to implement communication between the battery rod and the atomizer;
wherein the first communication signal comprises a first level signal served as a logic high level and a second level signal served as a logic low level; the second communication signal comprises a third level signal served as a logic high level and a fourth level signal served as a logic low level; and the second level signal and the fourth level signal are greater than a power supply voltage of an anti-counterfeiting circuit.

11. The atomizer according to claim 10, wherein the first level signal is greater than or equal to the third level signal, the fourth level signal is greater than or equal to the second level signal, and the third level signal is greater than the second level signal.

12. The atomizer according to claim 10, wherein the first level signal is greater than or equal to the third level signal, the fourth level signal is less than the second level signal, and the third level signal is greater than or equal to the second level signal.

13. The atomizer according to claim 10, wherein the second level signal is greater than the third level signal.

14. The battery rod according to claim 10, wherein the battery rod further comprises:
a first voltage unit, connected to the control unit and the first connection end, and configured to send the first level signal to the atomizer; and
a second voltage unit, connected to the control unit and the first connection end, and configured to send the second level signal to the atomizer.

15. The battery rod according to claim 14, wherein the first voltage unit comprises:
a first switch, comprising a first path end, a second path end, and a control end; wherein the control end of the first switch is connected to a first driving end of the control unit to receive a first driving signal, the first path end of the first switch is configured to receive a battery voltage, and the second path end of the first switch is connected to the first connection end.

16. The battery rod according to claim 15, wherein the second voltage unit comprises:
a second switch, comprising a first path end, a second path end, and a control end; wherein the control end of the second switch is connected to a second driving end of the control unit to receive a second driving signal, the second driving signal is a pulse width modulation (PWM) signal, and the first path end of the second switch is configured to receive the battery voltage;
a first resistor, wherein a first end of the first resistor is connected to the second path end of the second switch, and a second end of the first resistor is connected to the first connection end; and
a first capacitor, wherein a first end of the first capacitor is connected to the second path end of the second switch, and a second end of the first capacitor is grounded.

17. The battery rod according to claim 16, further comprising:
a protection unit, connected to the second voltage unit and the first voltage unit, and configured to prevent a heating signal of the first connection end from being affected in a heating process.

18. The battery rod according to claim 17, wherein the protection unit comprises:
a third switch, comprising a first path end, a second path end, and a control end; wherein the first path end of the third switch is connected to the second end of the first resistor, the control end of the third switch is connected to the control unit, and the second path end of the third switch is connected to the first connection end; or
the protection unit comprises:
a first diode, wherein the anode of the first diode is connected to the second end of the first resistor, and the cathode of the first diode is connected to the first connection end.

19. The battery rod according to claim 15, wherein the second voltage unit comprises:
a fourth switch, comprising a first path end, a second path end, and a control end; wherein the control end of the fourth switch is connected to a second driving end of the control unit to receive a second driving signal, and the first path end of the fourth switch is connected to a power supply management chip to receive a voltage; and
a second resistor, wherein a first end of the second resistor is connected to the second path end of the fourth switch, and a second end of the second resistor is connected to the first connection end.

20. The battery rod according to claim 15, wherein the second voltage unit comprises:
a fifth switch, comprising a first path end, a second path end, and a control end; wherein the control end of the fifth switch is connected to a second driving end of the control unit to receive a second driving signal, the second driving signal is a pulse width modulation (PWM) signal, and the first path end of the fifth switch is configured to receive the battery voltage;
a third resistor, wherein a first end of the third resistor is connected to the second path end of the fifth switch, and a second end of the third resistor is connected to the first connection end;
a sixth switch, comprising a first path end, a second path end, and a control end; wherein the control end of the sixth switch is connected to a third driving end of the control unit to receive a third driving signal, and the first path end of the sixth switch is configured to receive the battery voltage; and
a fourth resistor, wherein a first end of the fourth resistor is connected to the second path end of the sixth switch, and a second end of the fourth resistor is connected to the first connection end.

21. The battery rod according to claim 15, wherein the second voltage unit comprises:
a seventh switch, comprising a first path end, a second path end, and a control end; wherein the control end of the seventh switch is connected to a second driving end of the control unit to receive a second driving signal, the second driving signal is a level signal, and the first path end of the seventh switch is configured to receive the battery voltage; and
a fifth resistor, wherein a first end of the fifth resistor is connected to the second path end of the seventh switch, and a second end of the fifth resistor is connected to the first connection end.

22. The battery rod according to claim 15, wherein the second voltage unit comprises:
a first comparator, comprising a first input end, a second input end, and an output end; wherein the first input end of the first comparator is configured to receive a reference voltage, and the second input end of the first comparator is connected to the first connection end;
an eighth switch, comprising a first path end, a second path end, and a control end; wherein the control end of the eighth switch is connected to the output end of the first comparator, and the first path end of the eighth switch is configured to receive the battery voltage; and
a sixth resistor, wherein a first end of the sixth resistor is connected to the second path end of the eighth switch, and a second end of the sixth resistor is connected to the first connection end.

23. The battery rod according to claim 16, further comprising:
a signal identification unit, connected to a signal acquisition end of the control unit and the first connection end, and configured to identify the second communication signal and feed back an identification result to the signal acquisition end.

24. The battery rod according to claim 23, wherein the signal identification unit comprises:
a second comparator, comprising a first input end, a second input end, and an output end; wherein the output end of the second comparator is connected to the signal acquisition end of the control unit.

25. The battery rod according to claim 23, wherein the signal identification unit comprises:
an operational amplifier, comprising a first input end, a second input end, and an output end, wherein the output end of the operational amplifier is connected to the signal acquisition end of the control unit.

26. The battery rod according to claim 23, wherein the signal identification unit is an analog-to-digital converter, and the signal identification unit is integrated in the control unit.

27. An electronic atomizing device, comprising:
the atomizer according to any one of claims 1 to 9; and
the battery rod according to any one of claims 10 to 26.
